(19) Europäisches Patentamt / European Patent Office / Office européen des brevets

(11) EP 4 372 461 A1

(12) EUROPEAN PATENT APPLICATION
published in accordance with Art. 153(4) EPC

(43) Date of publication:
22.05.2024 Bulletin 2024/21

(21) Application number: 22842398.4

(22) Date of filing: 11.07.2022

(51) International Patent Classification (IPC):
G02F 1/137 (2006.01)    G02B 5/30 (2006.01)
G02F 1/1335 (2006.01)    G02F 1/1337 (2006.01)

(52) Cooperative Patent Classification (CPC):
G02B 5/30; G02F 1/1335; G02F 1/1337;
G02F 1/137

(86) International application number:
PCT/KR2022/010055

(87) International publication number:
WO 2023/287136 (19.01.2023 Gazette 2023/03)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.07.2021 KR 20210093370

(71) Applicant: Dongwoo Fine-Chem Co., Ltd.
Iksan-si, Jeollabuk-do 54631 (KR)

(72) Inventors:
• KIM, Dong-Hwi
  Sejong 30100 (KR)
• CHOI, Dong-Duk
  Bucheon-si, Gyeonggi-do 14587 (KR)

(74) Representative: Betten & Resch
Patent- und Rechtsanwälte PartGmbB
Maximiliansplatz 14
80333 München (DE)

(54) **OPTICAL LAMINATE AND MANUFACTURING METHOD THEREFOR, SMART WINDOW COMPRISING SAME, AND WINDOW AND DOOR FOR VEHICLE AND BUILDING, HAVING SAME APPLIED THERETO**

(57) The present invention relates to a variable transmittance optical laminate and a manufacturing method therefor, a smart window comprising same, and a window and a door for a vehicle and a building, having same applied thereto, the variable transmittance optical laminate comprising: a first polarizing plate comprising a first polarizer; a first transparent conductive layer formed on the inner surface of the first polarizing plate; a second polarizing plate facing the first polarizing plate and comprising a second polarizer; a second transparent conductive layer formed on the inner surface of the second polarizing plate and facing the first transparent conductive layer; and a liquid crystal layer provided between the first transparent conductive layer and the second transparent conductive layer, wherein at least one transparent conductive layer among the first transparent conductive layer and the second transparent conductive layer is formed so as to make direct contact with any one polarizing plate among the first polarizing plate and the second polarizing plate, and the contractile force (F1) of the first polarizer and the contractile force (F2) of the second polarizer satisfy formula 1.

Fig. 1

the second direction

the first direction

## Description

### Technical Field

The present disclosure relates to a variable transmittance optical stack(LAMINATE), a manufacturing method therefor, a smart window including the same, and a window and a door for a vehicle and a building having the same applied thereto.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing a transmittance of light when a voltage is applied has been developed.

The variable transmittance optical stack is driven by changing the transmittance by driving liquid crystal according to application of voltage. The variable transmittance optical stack developed so far is manufactured by patterning a conductive layer for driving liquid crystal on a separate or additional substrate, and then combining the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the stack is increased, and the transmittance is changed due to occurrence of phase difference.

Accordingly, there is a need to develop a variable transmittance optical stack capable of simplifying a manufacturing process, reducing the thickness by not including a separate or additional substrate for forming a conductive layer.

### Disclosure

### Technical Problem

The present disclosure is intended to provide a variable transmittance optical stack having a simplified manufactured process by not including a separate or additional substrate for forming a conductive layer.

Another objective of the present disclosure is to provide a variable transmittance optical stack in which the thickness is significantly reduced by not including a separate or additional substrate for forming a conductive layer.

Yet another objective of the present disclosure is to provide a variable transmittance optical stack in which a transmittance in a light transmissive mode thereof is improved by not including a separate or additional substrate for forming a conductive layer.

Still another objective of the present disclosure is to provide a variable transmittance optical stack having a curvature form by adjusting contractile forces of two different polarizers.

Still another objective of the present disclosure is to provide a variable transmittance optical stack minimized in deformation due to internal-external temperature change by adjusting contractile forces of two different polarizers.

Still another objective of the present disclosure is to provide a variable transmittance optical stack preventing deterioration of the light control function due to internal-external temperature change by adjusting contractile forces of two different polarizers.

Still another objective of the present disclosure is to provide a smart window including a variable transmittance optical stack, and a window and a door for a vehicle or a building to which the same is applied.

However, the problem to be solved by the present disclosure is not limited to the problems mentioned above, and other problems not mentioned will be clearly understood by those skilled in the art from the description below.

### Technical Solution

According to the present disclosure, there is provided a variable transmittance optical stack including: a first polarizing plate comprising a first polarizer; a first transparent conductive layer formed on an inner surface of the first polarizing plate; a second polarizing plate opposing the first polarizing plate, and comprising a second polarizer; a second transparent conductive layer formed on an inner surface of the second polarizing plate, and opposing the first transparent conductive layer; and a liquid crystal layer provided between the first transparent conductive layer and the second transparent conductive layer, wherein at least one transparent conductive layer of the first transparent conductive layer and the second transparent conductive layer may be formed by directly contacting with any one polarizing plate of the first polarizing plate and the second polarizing plate, and a contractile force (F1) of the first polarizer and a contractile force (F2) of the second polarizer may satisfy Equation 1 below.

**[Equation 1]**

$$0.5 \leq F1 \,/\, F2 \leq 0.8$$

In a first aspect of the present disclosure, the contractile force (F1) of the first polarizer may range from 1.0 to 2.0N.

In a second aspect of the present disclosure, the contractile force (F2) of the second polarizer may range from 2.0 to 4.0N.

In a third aspect of the present disclosure, a thickness of the first polarizer may range from 1 to 1$\mu$m.

In a fourth aspect of the present disclosure, a thickness of the second polarizer may range from 5 to 25$\mu$m.

In a fifth aspect of the present disclosure, an absorption shaft of the first polarizer and an absorption shaft of the second polarizer may be in parallel to each other.

In a sixth aspect of the present disclosure, at least one transparent conductive layer of the first transparent conductive layer and the second transparent conductive layer may be formed by directly contacting with any one polarizing plate of the first polarizing plate and the second polarizing plate without a separate or additional substrate between the polarizing plate and the transparent conductive layer.

In a seventh aspect of the present disclosure, at least one transparent conductive layer of the first transparent conductive layer and the second transparent conductive layer may be formed by directly contacting with any one polarizing plate of the first polarizing plate and the second polarizing plate with a highly adhesive layer between the polarizing plate and the transparent conductive layer.

In an eighth aspect of the present disclosure, at least one transparent conductive layer of the first transparent conductive layer and the second transparent conductive layer may include one or more types selected from a group consisting of transparent conductive oxide, metal, carbonaceous materials, conductive polymers, conductive ink, and nanowires.

In a ninth aspect of the present disclosure, at least one polarizing plate of the first polarizing plate and the second polarizing plate may include one or more types of functional layers selected from a group consisting of a protective layer, a retardation regulating layer, and a refractive index-matching layer.

In a tenth aspect of the present disclosure, at least one polarizing plate of the first polarizing plate and the second polarizing plate may have a thickness ranging from 30 to 200$\mu$m.

In an eleventh aspect of the present disclosure, the liquid crystal layer may include one or more types selected from a group consisting of a ball spacer and a column spacer.

In a twelfth aspect of the present disclosure, he ball spacer may have a diameter ranging from 1 to 10$\mu$m.

In a thirteenth aspect of the present disclosure, an occupancy area of the ball spacer in the liquid crystal layer may range from 0.01 to 10% of the area of the liquid crystal layer.

In a fourteenth aspect of the present disclosure, the variable transmittance optical stack may include one or more types selected from a group consisting of an alignment film, a pressure sensitive adhesive/adhesive layer, an ultraviolet ray absorption layer, and a hard coating layer.

The present disclosure relates to a manufacturing method of the variable transmittance optical stack.

The present disclosure relates to a smart window including the variable transmittance optical stack.

The present disclosure relates to a vehicle in which the smart window is applied to at least one of a front window, a rear window, a side window, a sunroof window, and an inner partition thereof.

The present disclosure relates to a window and a door for a building, the window and the door including the smart window.

**Advantageous Effects**

Furthermore, the variable transmittance optical stack according to the present disclosure is configured to omit the process of forming a conductive layer on a separate or additional substrate for the conventional optical stack and bonding the conductive layer and other members, so the manufacturing process thereof can be simplified in comparison to the conventional optical stack.

The variable transmittance optical stack according to the present disclosure does not include a separate or additional substrate for forming the conductive layer as the conductive layer is directly formed on one surface of the polarizing plate, so that the thickness thereof may be significantly reduced in comparison to the thickness of the conventional optical stack.

The variable transmittance optical stack according to the present disclosure does not include a separate or additional substrate for forming the conductive layer as the conductive layer is directly formed on one surface of the polarizing plate, so that transmittance in the light transmissive mode may be improved in comparison to the thickness of the conventional optical stack.

Furthermore, the variable transmittance optical stack according to the present disclosure may be configured to adjust contractile forces of two different polarizers so that the variable transmittance optical stack has a curvature portion.

Furthermore, the variable transmittance optical stack according to the present disclosure may be configured to adjust the contractile forces of two different polarizers, so that deformation due to internal-external temperature change may be minimized in comparison to the conventional optical stack.

Furthermore, the variable transmittance optical stack according to the present disclosure may be minimized in deterioration of the light control function according to internal-external temperature change in comparison to the conventional optical stack by adjusting the contractile forces of two different polarizers.

**Description of Drawings**

FIG. 1 is a view showing a stack structure of a variable transmittance optical stack according to an embodiment of the present disclosure.

FIGS. 2A to 2E are views each showing a stack structure of a polarizing plate according to one or a plurality of embodiments of the present disclosure.

FIGS. 3A and 3B are views each showing a stack structure of a variable transmittance optical stack according to another embodiment of the present disclosure.

**Best Mode**

The present disclosure relates to a variable transmittance optical stack having a curvature surface. More particularly, the present disclosure relates to a variable transmittance optical stack includes a conductive layer directly formed on one surface of a polarizing plate without a separate or additional substrate for forming a conductive layer to reduce a thickness of the stack and to improve transmittance in a light transmissive mode, and the variable transmittance optical stack is configured to adjust a contractile force of each of two polarizing plates opposing each other to be capable of minimizing deformation due to internal-external temperature change and deterioration of light control function.

More specifically, the present disclosure relates to a variable transmittance optical stack including: a first polarizing plate including a first polarizer; a first transparent conductive layer formed on an inner surface of the first polarizing plate; a second polarizing plate opposing the first polarizing plate, and including a second polarizer; a second transparent conductive layer formed on an inner surface of the second polarizing plate, and opposing the first transparent conductive layer; and a liquid crystal layer provided between the first transparent conductive layer and the second transparent conductive layer, wherein at least one transparent conductive layer of the first transparent conductive layer and the second transparent conductive layer is formed by directly contacting with any one polarizing plate of the first polarizing plate and the second polarizing plate, and a contractile force F1 of the first polarizer and a contractile force F2 of the second polarizer satisfy following Equation 1.

$$[\text{Equation 1}]$$

$$0.5 \leq F1 / F2 \leq 0.8$$

The variable transmittance optical stack of the present disclosure is particularly suitable for technical fields where a light transmittance can be changed in response to application of voltage, for example, may be used for a smart window, etc.

The smart window is an optical structure controlling the amount of light or heat passing through the window by changing light transmittance in response to an electrical signal. In other words, the smart window is provided to be changed into a transparent, opaque or translucent state by voltage and is called variable transmittance glass, lighting control glass, or smart glass.

The smart window may be used as partitions for partitioning an internal space of vehicles and buildings or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the conductive layer is directly formed in the polarizing plate, there is no need to include a separate or additional substrate for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a vehicle, or a window and a door for a building, and the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to materials described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate of the first polarizing plate and the second polarizing plate, and "the polarizer" may mean at least one polarizer of the first polarizer and the second polarizer, and "the transparent conductive layer" may mean at least one transparent conductive layer of the first transparent conductive layer and the second transparent conductive layer, and "the alignment film" may mean at least one alignment film the first alignment film and the second alignment film.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", and "lower portion", and "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to orientation.

"The contractile force" used in the specification is defined as a value obtained by cutting the polarizer into the size of 30mm x 2mm such that a direction of an absorption shaft is provided as a long edge and then by being calculated by using DMA Q800 (Dynamic mechanical analyzer, TA company).

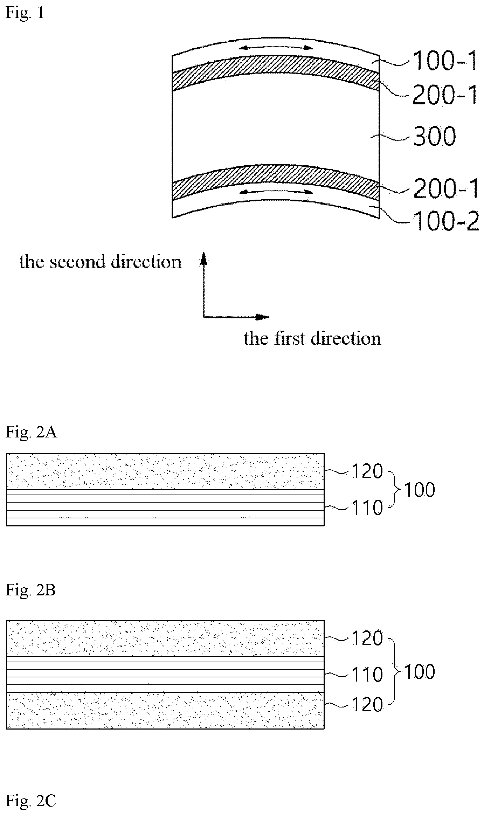

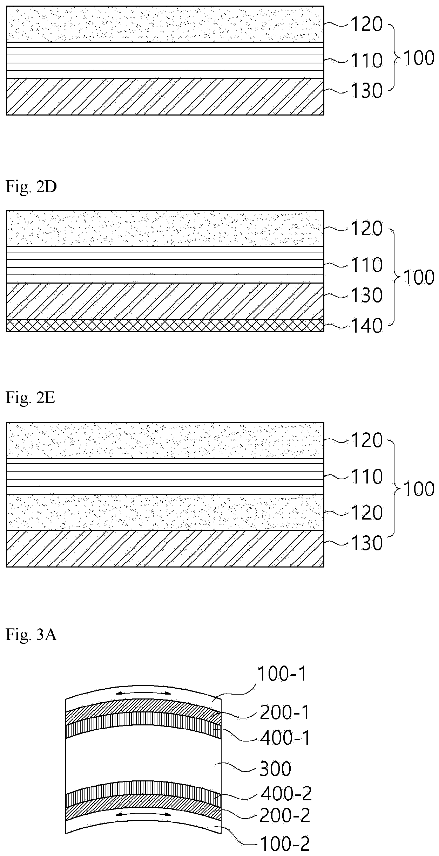

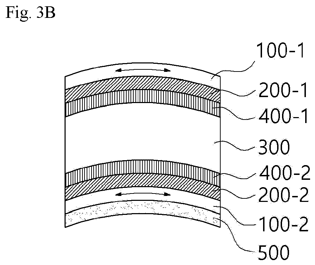

FIG. 1 is a view showing a stack structure of a variable transmittance optical stack according to an embodiment of the present disclosure. FIGS. 2A to 2E are views each showing a stack structure of a polarizing plate according to one or a plurality of embodiments of the present disclosure. FIGS. 3A and 3B are views each showing a stack structure of a variable transmittance optical stack according to another embodiment of the present disclosure.

Referring to FIG. 1, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300, and may include a curved part.

A direction of formation of the curved part may be appropriately selected for user's needs, and the curved part, for example, may be formed such that a center region of the optical stack faces the outside space.

Referring to FIG. 2, the polarizing plate 100 includes a polarizer 110, and on one or both surfaces of the polarizer 110, may include a functional layer such as a protective layer 120, a retardation regulating layer 130, a refractive index regulating layer 140, etc. For example, the polarizing plate 100 may include the polarizer 110 and the protective layer 120 stacked on one or both surfaces of the polarizer 110 (referring to FIGS. 2A and 2B). Furthermore, the polarizing plate 100 may include the polarizer 110, the protective layer 120 stacked on a first surface of the polarizer 110, and the retardation regulating layer 130 stacked on a second surface opposite to the first surface of the polarizer 110 (referring to FIG. 2C). Furthermore, the polarizing plate 100 may include the polarizer 110, the protective layer 120 stacked on the first surface of the polarizer, the retardation regulating layer 130 and the refractive index regulating layer 140 successively stacked on the second surface opposite to the first surface of the polarizer 110 (referring to FIG. 2D). Furthermore, the polarizing plate 100 may include the polarizer 110, the protective layer 120 stacked on the first surface of the polarizer, and the protective layer 120 and the retardation regulating layer 130 successively stacked on the second surface opposite to the first surface of the polarizer 110 (referring to FIG. 2E).

The polarizer 110 may use a polarizer developed before and after, and, for example, may use a stretched polarizer, a coated polarizer, etc.

According to the embodiment, the stretched polarizer may include a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin includes a denatured resin, and for example, may be polyvinyl formal or polyvinyl acetal denatured into aldehyde.

According to the embodiment, the coated polarizer may be formed of a composition for liquid crystal coating, and, at this point, the composition for liquid crystal coating may contain reactive liquid crystal compound, and dichroic dye, etc.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

The dichroic dye is a substance contained in the composition for liquid crystal coating to impart the polarization characteristic, and has a property in which absorbance in a direction of long axis of molecule and absorbance in a direction of short axis. The dichroic dyes may be dichroic dyes currently developed or to be developed, and may contain one or more types of dyes selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain levelling agents, polymerization initiators, etc. within a range that does not impair the polarization characteristic of a coating film.

According to the embodiment, the first polarizer provided in the first polarizing plate 100-1 and the second polarizer provided in the second polarizing plate 100-2 may reflectively have different contractile forces. When the contractile forces of the first polarizer and the second polarizer are different from each other, formation of the curved part of the optical stack can be easily performed, and durability of the optical stack having the curved part can be improved.

For example, as shown in FIG. 1, the contractile force F2 of the second polarizer provided in the second polarizing plate 100-2 may be larger than the contractile force F1 of the first polarizer provided in the first polarizing plate 100-1 and in this case, the optical stack may have a curved form such that the center region of the optical stack faces in the second direction.

The contractile force F1 of the first polarizer and the contractile force F2 of the second polarizer may be appropriately preset without affecting the objectives of the present disclosure, and it is desirable that the contractile forces satisfy following Equation 1.

**[Equation 1]**

$$0.5 \leq F1 / F2 \leq 0.8$$

When a ratio of the contractile force F1 of the first polarizer to the contractile force F2 of the second polarizer (F1/F2) is less than 0.5, the light control function may be deteriorated due to excessive flexure of the optical stack, when the ratio exceeds 0.8, it is disadvantageous to form the curvature form of the optical stack.

According to one or a plurality of embodiments, the contractile force F1 of the first polarizer may be between 1.0 and 2.0N, preferably between 1.3 and 1.8N. Furthermore, the contractile force F2 of the second polarizer may be between 2.0 and 4.0N, preferably between 2.2 and 3.8N. When the contractile force F1 of the first polarizer and the contractile force F2 of the second polarizer satisfy the above ranges, it is advantageous to form the curvature form of the optical stack, and deterioration of the light control function of the optical stack due to the curved part does not occur, and deterioration of durability of the optical stack according to internal-external temperature changes of the optical stack can be minimized.

According to one or the plurality of embodiments, the thickness of the first polarizer may be between 1 and 10$\mu$m, preferably may be between 3 and 10$\mu$m. The thickness of the second polarizing plate may be between 5 and 25$\mu$m, preferably may be between 0 and 25$\mu$m. When the thickness of the first polarizing plate and the thickness of the second polarizing plate satisfies the above ranges, it is advantageous to form the curvature form of the optical stack, and deterioration of the light control function of the optical stack due to the curved part does not occur, and deterioration of durability of the optical stack according to internal-external temperature changes of the optical stack can be minimized.

The absorption shaft of the first polarizer and the absorption shaft of the second polarizer may be preferably arranged without affecting the objectives of the present disclosure, and the absorption shaft of the first polarizer and the absorption shaft of the second polarizer, for example, may be in parallel to each other.

The protective layer 120 is provided to preserve the polarization characteristic of the polarizer 110 from a post-processing and external environment, and may be implemented into a form such as a protective film, etc.

As shown in FIGS. 2A and 2B, the protective layer 120 may be formed by directly contacting with one or both surfaces of the polarizer 110, but is not limited thereto. For example, the protective layer may be used as a double layer structure in which one or more protective layers are successively stacked, and may be formed in directly contact with another functional layer.

According to one or a plurality of embodiments, the protective layer may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation regulating layer 130 may be provided to complement optical properties of the optical stack, and may be implemented in a retardation film, and a retardation film currently developed or to be developed may be used therefor. For example, a quarter-wave plate (1/4 wave plat) or a half-wave plate (1/2 wave plat) may be used to delay a phase difference(retardation) of light, and may be used alone or in combination.

As shown in FIGS. 2C and 2D, the retardation regulating layer 130 may be formed by directly contacting with one surface of the polarizer 110, but is not limited thereto. For example, as shown in FIG. 2E, the retardation regulating layer 130 is formed on one surface of the protective layer 120, and the polarizer 110, the protective layer 120, and the retardation regulating layer 130 may be successively stacked.

The retardation regulating layer 130 may be a polymer stretched film or a liquid crystal polymerized film, formed by stretching a polymer film that can impart optical anisotropy by stretching in an appropriate manner.

According to the embodiment, the polymer stretched film may use a polymer layer including: cyclo olefin polymer (COP) such as polyolefin such as polyethylene (PE), polypropylene (PP), etc., polynorbornene, etc.,; polyester such as polyvinyl chloride (PVC), polyacrylonitrile (PAN), polysulfone (PSU), acryl resin, polycarbonate (PC), polyethylene terephthalate (PET), etc.; and cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then is solidified in a cast dry manner, thereby cast-molding the non-stretched film.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, a biaxial stretched film may be manufactured by performing stretching in a sequential biaxial stretching method of roll stretching and tenter stretching, a simultaneous biaxial stretching method of tenter stretching, a biaxial stretching method of tubular stretching, etc.

The liquid crystal polymerized film may contain reactive liquid crystal compound in a polymerized state. The description of the reactive liquid crystal compound of the coated polarizer described above may be equally applied to the reactive liquid crystal compound.

In one or a plurality of embodiments, the thickness of the retardation regulating layer 130 may be a thickness of between 10μm and 100μm in the polymer stretched film, and may be a thickness of between 0.1μm and 5μm in the liquid crystal polymerized film.

The refractive index regulating layer 140 is provided to compensate for the refractive index difference of the optical stack by the transparent conductive layer 200, and may serve to improve the visible characteristic by reducing the difference of the refractive index. Furthermore, the refractive index regulating layer 140 may be provided to correct a color based on the transparent conductive layer 200. Meanwhile, when the transparent conductive layer has a pattern, the refractive index regulating layer 140 may correct the transmittance difference between a region with the pattern and a non-pattern region.

Specifically, the transparent conductive layer 200 is stacked close to other members having a refractive index different therefrom (for example, the polarizer 110, etc.), and due to the difference of the refractive index between the transparent conductive layer and another layer close thereto, the difference of optical transmittance may be caused. Specifically, when a pattern is formed on the transparent conductive layer, a problem in that the pattern region and the non-pattern region are visually distinguished from each other. Therefore, the refractive index regulating layer 140 is included to compensate for refractive index, thereby reducing the difference with the optical transmittance of the optical stack. Specifically, when a pattern is formed on the transparent conductive layer, the pattern region and the non-pattern region should be provided so as not to be visually distinguished.

According to the embodiment, the refractive index of the refractive index regulating layer 140 may be appropriately selected according to a material of another adjacent member, and may be preferably between 1.4 and 2.6, more preferably may be between 1.4 and 2.4. In this case, it is possible to prevent optical loss due to sharp difference of the refractive index between another member such as the polarizer 110 and the transparent conductive layer 200.

The refractive index regulating layer 140 is not particularly limited as long as it can prevent the sharply refractive difference between other members, such as the polarizer 110, etc., and the transparent conductive layer, and may use a compound used in the formation of conventional or later developed refractive index regulating layers. For example, the refractive index regulating layer 150 may be formed from refractive index regulating layer formation composition including polymerizable isocyanate compound.

According to the embodiment, the polarizing plate 100 may include other functional layers to assist or strengthen the characteristics of the polarizer in addition to the above-mentioned functional layers and, for example, may include an overcoat layer, etc. in order to further improve the mechanical durability.

According to one or a plurality of embodiments, the polarizing plate 100 may have a thickness of between 30 and 200 μm, and preferably, a thickness of between 30 and 170 μm, and more particularly, a thickness of between 50 and 150 μm. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substrate and bonding-coupling a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve the transmittance in the light transmissive mode and the curvature characteristic while reducing the entire thickness of the stack.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate 100 to which the pre-processing is performed. The pre-processing is not limited to the corona processing or the plasma processing, and may be a pre-processing currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 is preferably have a transmittance of 50% or more with respect to visible light, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous material may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining these substances in a structure of two or more layers. For example, in order to reduce the reflectance of incident light and increase the transmittance, the transparent conductive layer may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust transmittance of light incident in one or a plurality of directions according to electric fields to change a driving mode of the optical stack.

The liquid crystal layer 300 may include liquid crystal compounds and, for example, in an optical control region, may be located in a space provided by a sealant layer (not shown) and a spacer (not shown) that are provided between the first polarizing plate 100-1 and the second polarizing plate 100-2.

A liquid crystal movement method of the liquid crystal layer 300 is not particularly limited and, for example, the twisted nematic (TN) mode, the super twisted nematic (STN) mode, the vertical alignment (VA) mode, etc. may be used.

The liquid crystal compounds are operated in response to electric fields and is not particularly limited as long as it can control transmittance of light, and liquid crystal compounds developed before and after may be used and, for example, the description of reactive liquid crystal compound of the above-mentioned coated polarizer may be equally applied thereto.

The sealant may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

As the base resins of the sealant, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant may be provided in a method commonly used in the art and, for example, may be formed drawing a sealant at an outer portion of the liquid crystal layer (i.e., inactivate region) with a dispenser having a nozzle.

The spacer may include at least one spacer among a ball spacer and a column spacer, and specifically, may preferably be a ball spacer. The ball spacer may include one or more ball spaces, and preferably has a diameter of 1 to 10 $\mu$m. Furthermore, when viewed in a planar direction, a region where the ball spacer is occupied in the liquid crystal layer 300 is preferably 0.01 to 10% of the area of the liquid crystal layer 300 in an aspect of improvement of user's visibility and transmittance in a light transmissive mode.

According to the embodiment, the liquid crystal layer 300 may include an alignment film 400 if necessary (referring to FIG. 3A) and, alignment films 400, for example, may be formed on opposite surfaces of the liquid crystal layer 300 including liquid crystal compounds.

The alignment film 400 is not particularly limited as long as it adds the orientation to the liquid crystal compounds. For example, the alignment film 400 may be manufactured by coating and hardening an alignment film coating composition containing aligned polymers, photopolymerization initiators, and solvent. Although the aligned polymer is not particularly limited, the aligned polymer may be polyacrylate-based resin, polyamic resin, polyimide-based resin, polymer having cinnamate groups, etc. and may use polymer capable of expressing orientation, the polymer being currently developed or to be developed.

The variable transmittance optical stack of the present disclosure may include other members without affecting the objectives of the present disclosure and, for example, may include the pressure sensitive adhesive/adhesive layer 500 (referring to 3B) and may include an ultraviolet rays absorption layer, a hard coating layer, etc.

The pressure sensitive adhesive/adhesive layer 500 may be formed using an adhesive or a pressure sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper type may be selected and used depending on photopolymerization resin.

The pressure sensitive adhesive may use a pressure sensitive adhesive currently developed or to be developed. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure sensitive adhesive is not particularly limited as long as it has pressure sensitive adhesion and viscoelasticity. For ease of acquisition, preferably, the pressure sensitive adhesive may include acrylic-based pressure sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably include polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01 to 50 $\mu$m in order to ensure sufficient adhesion and minimize the thickness of the optical stack and, preferably, may have a thickness ranging from 0.05 to 20 $\mu$m and, more preferably, may have a thickness ranging from 0.1 to 10 $\mu$m.

The ultraviolet ray absorption layer is not particularly limited as long as it is to prevent deterioration of the optical stack due to UV rays. For example, the ultraviolet rays absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc.. The benzotriazole-based ultraviolet absorber or the triazine-based ultraviolet absorber that have high transparency and the excellent effect of preventing deterioration of the polarizing plate or the variable transmittance layer may be preferably used as the ultraviolet rays absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylenebis(2-(2H-benzo[d][1,2,3] triazole-2-yl)-4-(2,4,4-trimethylpentane-2-yl)phenol), 6,6'-methylenebis(2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers developed before or after may be used thereto.

According to the embodiment, the hard coating layer may be formed by applying compositions for forming a hard coating layer on another member and then hardening the layer by light or heat. The compositions for forming a hard coating layer are not particularly limited and, for example, may include photocurable compounds and photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiator may be oxime ester-based photoinitiator, etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

**Mode for Invention**

Hereinbelow, an embodiment of the present disclosure will be described in detail. However, the present disclosure may not be limited to embodiments disclosed below and may be implemented in various shapes, and the embodiments merely ensure that the present disclosure is complete and are provided to fully inform those skilled in the art of the scope of the present disclosure, and the present disclosure is defined by the scope of the claims.

**Examples and Comparative examples: formation of the optical stack**

**Example 1**

The polarizer with a thickness of 8μm is manufactured passing through: swelling, wherein a polyvinyl alcoholic resin film is immersed in a swelling solution, to which boric acids, chlorides, inorganic acids, inorganic salts, and water-soluble organic solvents and alcohols are added in addition to deionized water, under a temperature condition between 20°C and 30°C and for a time between 60 and 240 seconds to secure a space where dye may be colored; dyeing, wherein the base film is dyed by being immersed using an aqueous solution containing 0.1 parts by weight of iodine and 5 parts by weight of potassium iodide based on 100 parts by weight of water, for 60 to 300 seconds; boric acid treating, wherein the dyed base film is immersed in an aqueous solution containing 5 parts by weight of boric acid based on 100 parts by weight of water; and drying, wherein the base film is dried within a temperature range of between 50°C and 80°C.

The first polarizing plate was manufactured by stacking different protective films on opposite surfaces of the polarizer with the adhesive layer. The protective films may respectively use a triacetyl cellulose resin film with a thickness of 25 μm and a cyclo-olefin resin film with a thickness of 25 μm. A polarizer contractile force of the first polarizing plate was 1.74N.

Meanwhile, the second polarizing plate was manufactured like the first polarizing plate except that the polarizer with a thickness of 18 μm is manufactured. The polarizer contractile force of the second polarizing plate was 2.67N.

The transparent conductive layer was formed on a surface of each cyclo-olefin resin film of each of the first and second polarizing plates, and then the alignment film was formed thereon. Thereafter, the first and second polarizing plates are bonded to each other with the liquid crystal layer located therebetween, and therefore the variable transmittance optical stack (size: horizontal 180mm x vertical 100mm) consisting of the first polarizing plate/the transparent conductive layer/the alignment film/the liquid crystal layer/the alignment film/the transparent conductive layer/the second polarizing plate was manufactured. Directions of absorption shafts of the first polarizing plate and the second polarizing plate are equal to each other, and used the liquid crystal layer driven by the VA (Vertical Alignment) mode.

**Example 2**

Except that the polarizer of the first polarizing plate has a thickness of 8 $\mu$m and the polarizer of the second polarizing plate has a thickness of 12 $\mu$m, the variable transmittance optical stack of the example 2 was manufactured by the same method as the example 1.

**Example 3**

Except that the polarizer of the first polarizing plate has a thickness of 8 $\mu$m and the polarizer of the second polarizing plate has a thickness of 24$\mu$m, the variable transmittance optical stack of the example 3 was manufactured by the same method as the example 1.

**Comparative example 1**

Except that the polarizer of the first polarizing plate has a thickness of 12$\mu$m and the polarizer of the second polarizing plate has a thickness of 12 $\mu$m, the variable transmittance optical stack of the comparative example 1 was manufactured by the same method as the example 1. However, when the boric acid treating is performed, the second polarizer was manufactured while lowering the temperature of liquid chemical by 3°C in comparison to manufacture of the first polarizer.

**Comparative example 2**

Except that the polarizer of the first polarizing plate has a thickness of 8 $\mu$m and the polarizer of the second polarizing plate has a thickness of 28 $\mu$m, the variable transmittance optical stack of the comparative example 2 was manufactured by the same method as the example 1.

**Experimental examples**

**Evaluation of contractile force of polarizer**

In the examples 1 to 3 and the comparative examples 1 and 2, the polarizer used in each of the first and second polarizing plates of the variable transmittance optical stack is cut into a size of 30mm $\times$ 2mm such that a direction of the absorption shaft of the polarizer is a long edge, and then the contractile force is measured using DMA Q800 (Dynamic mechanical analyzer, TA company), and results thereof are shown in following Table 1. At this point, in order to remain the polarizer before measurement in a tight state, the measurement is performed using minimum pre-load.

**Evaluation of Flexural property of optical stack**

In the examples 1 to 3 and the comparative examples 1 and 2, the variable transmittance optical stack is attached between two 0.5T glasses (8inch size) by using the acrylic-based pressure sensitive adhesive, is left at 80°C for 250 hours, and then is left for 2 hours under a condition of 23°C and relative humidity of 50%, and then a height difference of panel flexure is measured by the 3D measurement instrument (VMR-6555, Nikon company) and a location at the highest part on the flat plate is measured, and results thereof are shown in following Table 1. At this point, a direction of the second polarizing plate (indoors direction) is preset as'+'.

**Evaluation of optical control uniformity of optical stack**

With respect to the examples 1 to 3 and the comparative examples 1 and 2, an adhesive is coated to both surfaces of the optical stack and the optical stack is bonded between glass substrates. Thereafter, as amounts of optical transmittance through the entire part are compared to each other, the results thereof area shown in following Table 1.

<Evaluation standard of optical control uniformity>

◦: the area of which optical blocking effect is uniform is more than 95% or more

△: the area of which optical blocking effect is uniform is equal to or greater than 90% and less than 95%

X: the area of which optical blocking effect is uniform is less than 90% or marked light leakage occurs

[Table 1]

| | Polarizer contractile force (N) | | Contractile force ratio (first/second) | Flexure (mm) <indoors direction '+'> | Optical control function |
|---|---|---|---|---|---|
| | First polarizing plate | Second polarizing plate | | | |
| Example 1 | 1.74N | 2.67N | 0.65 | 1.4mm | ○ |
| Example 2 | 1.74N | 2.25N | 0.77 | 1.2mm | ○ |
| Example 3 | 1.74N | 3.48N | 0.50 | 1.8mm | △ |
| Comparat ive example 1 | 2.03N | 2.25N | 0.90 | 0.8mm | ○ |
| Comparat ive example 2 | 1.74N | 3.77N | 0.46 | 2.0mm | X |

Referring to Table 1, according to the examples 1 to 3 in which a ratio of the contractile force of the first polarizer to the contractile force of the second polarizer is included in the range between 0.5 and 0.8, the results of the flexural property evaluation are between 1.2 and 1.8mm and the variable transmittance optical stack is excellent in flexural property, and the entire uniform area of the optical blocking effect is 90% or more and the variable transmittance optical stack is excellent in the optical control function.

Meanwhile, according to the comparative example 1 in which a ratio of the contractile force of the first polarizer to the contractile force of the second polarizer exceeds 0.8, the result of the flexural property evaluation is 0.8mm and the variable transmittance optical stack is disadvantageous in flexural property in comparison to the optical stack of the examples.

Furthermore, according to the comparative example 2 in which a ratio of the contractile force of the first polarizer to the contractile force of the second polarizer is less than 0.5, excessive flexure of the liquid crystal layer occurs and thus the variable transmittance optical stack is disadvantageous in the optical control function in comparison to the optical stack of the examples.

**Industrial Application**

Furthermore, the variable transmittance optical stack according to the present disclosure is configured to omit the process of forming a conductive layer on a separate or additional substrate for the conventional optical stack and bonding the conductive layer and other members, so the manufacturing process thereof can be simplified in comparison to the conventional optical stack.

**Claims**

1.    A variable transmittance optical stack comprising:

a first polarizing plate comprising a first polarizer;
a first transparent conductive layer formed on an inner surface of the first polarizing plate;
a second polarizing plate opposing the first polarizing plate, and comprising a second polarizer;
a second transparent conductive layer formed on an inner surface of the second polarizing plate, and opposing the first transparent conductive layer; and
a liquid crystal layer provided between the first transparent conductive layer and the second transparent conductive layer,
wherein at least one transparent conductive layer of the first transparent conductive layer and the second transparent conductive layer is formed by directly contacting with any one polarizing plate of the first polarizing plate and the second polarizing plate, and

a contractile force (F1) of the first polarizer and a contractile force (F2) of the second polarizer satisfy Equation 1 below.

**[Equation 1]**

$$0.5 \leq F1 / F2 \leq 0.8$$

2. The variable transmittance optical stack of claim 1, wherein the contractile force (F1) of the first polarizer ranges from 1.0 to 2.0N.

3. The variable transmittance optical stack of claim 1, wherein the contractile force (F2) of the second polarizer ranges from 2.0 to 4.0N.

4. The variable transmittance optical stack of claim 1, wherein a thickness of the first polarizer ranges from 1 to 10μm.

5. The variable transmittance optical stack of claim 1, wherein a thickness of the second polarizer ranges from 5 to 25μm.

6. The variable transmittance optical stack of claim 1, wherein an absorption shaft of the first polarizer and an absorption shaft of the second polarizer are in parallel to each other.

7. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate without an additional substrate between the polarizing plate and the transparent conductive layer.

8. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate with a highly adhesive layer between the polarizing plate and the transparent conductive layer.

9. The variable transmittance optical stack of claim 1, wherein at least one transparent conductive layer of the first transparent conductive layer and the second transparent conductive layer comprises one or more types selected from a group consisting of transparent conductive oxide, metal, carbonaceous materials, conductive polymers, conductive ink, and nanowires.

10. The variable transmittance optical stack of claim 1, wherein at least one polarizing plate of the first polarizing plate and the second polarizing plate comprises one or more types of functional layers selected from a group consisting of a protective layer, a retardation regulating layer, and a refractive index-matching layer.

11. The variable transmittance optical stack of claim 1, wherein at least one polarizing plate of the first polarizing plate and the second polarizing plate has a thickness ranging from 30 to 200μm.

12. The variable transmittance optical stack of claim 1, wherein the liquid crystal layer comprises one or more types selected from a group consisting of a ball spacer and a column spacer.

13. The variable transmittance optical stack of claim 12, wherein the ball spacer has a diameter ranging from 1 to 10μm.

14. The variable transmittance optical stack of claim 12, wherein an occupancy area of the ball spacer in the liquid crystal layer ranges from 0.01 to 10% of the area of the liquid crystal layer.

15. The variable transmittance optical stack of claim 1, wherein the variable transmittance optical stack comprises one or more types selected from a group consisting of an alignment film, a pressure sensitive adhesive/adhesive layer, an ultraviolet ray absorption layer, and a hard coating layer.

16. A manufacturing method of the variable transmittance optical stack of any one of claims 1 to 15.

17. A smart window comprising the variable transmittance optical stack of any one of claims 1 to 15.

18. A vehicle in which the smart window of claim 17 is applied to at least one of a front window, a rear window, a side window, a sunroof window, and an inner partition thereof.

19. A window and a door for a building, the window and the door comprising the smart window of claim 17.

Fig. 1

100-1
200-1
300
200-1
100-2

the second direction

the first direction

Fig. 2A

120
110 } 100

Fig. 2B

120
110 } 100
120

Fig. 2C

120
110 } 100
130

Fig. 2D

120
110
130 } 100
140

Fig. 2E

120
110
120 } 100
130

Fig. 3A

100-1
200-1
400-1
300
400-2
200-2
100-2

Fig. 3B

100-1
200-1
400-1
300
400-2
200-2
100-2
500

## INTERNATIONAL SEARCH REPORT

| International application No. |
|---|
| **PCT/KR2022/010055** |

**A. CLASSIFICATION OF SUBJECT MATTER**

**G02F 1/137**(2006.01)i; **G02B 5/30**(2006.01)i; **G02F 1/1335**(2006.01)i; **G02F 1/1337**(2006.01)i

According to International Patent Classification (IPC) or to both national classification and IPC

**B. FIELDS SEARCHED**

Minimum documentation searched (classification system followed by classification symbols)

G02F 1/137(2006.01); G02B 5/30(2006.01); G02F 1/133(2006.01); G02F 1/1335(2006.01); G02F 1/1339(2006.01); G02F 1/1341(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광판(polarizing plate), 편광자(polarizer), 도전층(conductive layer), 액정(liquid crystal), 수축력(shrinkage force)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2007-0094188 A (BOE HYDIS TECHNOLOGY CO., LTD.) 20 September 2007 (2007-09-20) See paragraphs [0035]-[0043] and figure 2. | 1-19 |
| Y | KR 10-2014-0091363 A (DONGWOO FINE-CHEM CO., LTD.) 21 July 2014 (2014-07-21) See paragraphs [0033]-[0043], claim 1 and figure 1. | 1-19 |
| Y | KR 10-2174676 B1 (LG CHEM, LTD.) 05 November 2020 (2020-11-05) See paragraph [0107], claim 5 and figures 1 and 2. | 6,10 |
| Y | KR 10-2021-0000887 A (LG CHEM, LTD.) 06 January 2021 (2021-01-06) See paragraphs [0038]-[0043] and figures 1 and 2. | 12-14 |
| A | US 2015-0168779 A1 (SAMSUNG SDI CO., LTD.) 18 June 2015 (2015-06-18) See claims 1-10 and figures 1-3. | 1-19 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **14 October 2022** | **17 October 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/010055**

| Patent document cited in search report | | | Publication date (day/month/year) | Patent family member(s) | | | Publication date (day/month/year) |
|---|---|---|---|---|---|---|---|
| KR | 10-2007-0094188 | A | 20 September 2007 | None | | | |
| KR | 10-2014-0091363 | A | 21 July 2014 | CN | 104919363 | A | 16 September 2015 |
| | | | | JP | 2016-504632 | A | 12 February 2016 |
| | | | | TW | 201428362 | A | 16 July 2014 |
| | | | | WO | 2014-109489 | A1 | 17 July 2014 |
| KR | 10-2174676 | B1 | 05 November 2020 | CN | 111201484 | A | 26 May 2020 |
| | | | | EP | 3677958 | A1 | 08 July 2020 |
| | | | | JP | 2021-501366 | A | 14 January 2021 |
| | | | | JP | 7123468 | B2 | 23 August 2022 |
| | | | | KR | 10-2019-0138598 | A | 13 December 2019 |
| | | | | TW | 202014306 | A | 16 April 2020 |
| | | | | TW | I690414 | B | 11 April 2020 |
| | | | | US | 11022845 | B2 | 01 June 2021 |
| | | | | US | 2020-0326573 | A1 | 15 October 2020 |
| | | | | WO | 2019-235809 | A1 | 12 December 2019 |
| KR | 10-2021-0000887 | A | 06 January 2021 | None | | | |
| US | 2015-0168779 | A1 | 18 June 2015 | CN | 104749815 | A | 01 July 2015 |
| | | | | CN | 104749815 | B | 07 September 2018 |
| | | | | KR | 10-2015-0076564 | A | 07 July 2015 |
| | | | | KR | 10-2084116 | B1 | 03 March 2020 |
| | | | | TW | 201525575 | A | 01 July 2015 |
| | | | | TW | I536079 | B | 01 June 2016 |
| | | | | US | 9575355 | B2 | 21 February 2017 |

Form PCT/ISA/210 (patent family annex) (July 2022)

**REFERENCES CITED IN THE DESCRIPTION**

**Patent documents cited in the description**

- JP 2018010035 A